# EUROPÄISCHE PATENTSCHRIFT

(11) **EP 2 573 436 B1**
(45) Veröffentlichungstag und Bekanntmachung des Hinweises auf die Patenterteilung: **05.03.2014**
(21) Anmeldenummer: 11182281.3
(22) Anmeldetag: 22.09.2011
(51) Int. Cl.: F16K 15/06, F16L 37/32

(54) **Ventilelement für ein Kupplungsteil einer Hydraulik-Hochdruckkupplung sowie Kupplungsteil**
Valve element for a coupling of a high pressure hydraulic coupling and coupling
Elément de soupape pour un élément de raccord hydraulique haute pression et élément de raccord

(43) Veröffentlichungstag der Anmeldung: 27.03.2013
(73) Patentinhaber: Voswinkel Entwicklungs- und Verwaltungs-GmbH & Co. KG, 58540 Meinerzhagen (DE)
(72) Erfinder: Mischketat-Duman, Steffen, 58540 Meinerzhagen (DE)
(74) Vertreter: Patentanwälte Dr. Solf & Zapf

(56) Entgegenhaltungen:
- DE-A1- 3 509 371
- US-A- 3 131 905
- US-A- 5 052 435

## Beschreibung

Die vorliegende Erfindung betrifft gemäß dem Oberbegriff des Anspruchs 1 ein Ventilelement für ein Kupplungsteil einer Hochdruckkupplung für hydraulische Druckmittel, mit einem Ventilkörper zur längsbeweglichen Anordnung in einem Kupplungsgehäuse, wobei der Ventilkörper pilzartig mit einem Ventilkopf ausgebildet ist, der einerseits zur dichtenden Anlage in einem gehäuseseitigen Konus-Dichtsitz einen Dichtkegel mit einer äußeren Konusfläche und eine elastische Ringdichtung und andererseits auf seiner vorderen Stirnseite einen axial vorstehenden Öffnungsansatz aufweist.

Ferner betrifft die Erfindung auch ein mit einem solchen Ventilelement ausgestattetes Kupplungsteil, und zwar in einer Ausgestaltung als Kupplungsstecker oder als Kupplungsmuffe, wobei das Ventilelement mit einem inneren gehäuseseitigen Konus-Dichtsitz zusammenwirkt.

Hydraulik-Hochdruckkupplungen der genannten Art sind aus zahlreichen Veröffentlichungen bekannt. Lediglich beispielhaft seien hier die Dokumente DE 35 09 371 A1 und 36 34 624 A1 genannt, die jeweils eine Hydraulik-Kupplung in einer speziellen Ausgestaltung beschreiben, um ein Steckkuppeln auch unter einem auf einer Seite, der so genannten Nehmerseite, in dem Steckkupplungsteil herrschenden Restdruck zu ermöglichen.

Bei den üblichen Hydraulik-Kupplungen kommen während des Steckkupplungsvorgangs der zwei Kupplungsteile die einander mit entgegengesetzter Öffnungsrichtung gegenüberliegenden Ventilelemente mit ihren Öffnungsansätzen zur direkten Anlage aneinander, so dass sie sich gegenseitig öffnen, indem sie gegen eine Schließfederkraft aus ihrer Schließlage mit Anlage im Dichtsitz in eine vom Dichtsitz abgehobene Öffnungslage bewegt werden.

Wegen der Höhe des jeweiligen Druckes, der im geschlossenen Zustand des Ventils unter bestimmten Betriebsbedingungen innerhalb des Kupplungsteils herrschen kann, bestehen bisher die Ventilkörper mit dem Ventilkopf und der äußeren Konusfläche sowie dem vorderen Öffnungsansatz aus Stahl, um die druckbedingte Schließkraft im Konus-Dichtsitz des Kupplungsgehäuses schadlos abstützen zu können. Die zusätzlich als Weichdichtung vorgesehene Ringdichtung ist als separates Teil in einer Ringkammer des Ventilkopfes angeordnet, wobei diese Ringkammer zwischen dem Ventilkopf und einem separaten Haltering gebildet ist, der häufig aus Messing besteht. Diese Ausführung führt zu einem hohen Material- und Herstellungsaufwand. Außerdem ist diese Ausgestaltung mit dem Nachteil verbunden, dass es beim Öffnen des Ventils zu Schäden oder gar Zerstörungen im Bereich der Ringdichtung kommen kann, weil beim Öffnen des Ventils durch den Hydraulikdruck und den noch sehr kleinen Ringspalt zwangsläufig eine derart starke Hydraulikströmung auftritt, dass die als separates Teil relativ lose in der Ringkammer angeordnete Ringdichtung mitgerissen und somit aus ihrer Ringkammer "ausgewaschen" werden kann.

Der vorliegenden Erfindung liegt die Aufgabe zu Grunde, zur Vermeidung der beschriebenen Nachteile ein Ventilelement der beschriebenen Art zu schaffen, welches mit reduziertem Material- und Herstellungsaufwand und dadurch wirtschaftlicher herstellbar ist, und mit dem eine erhöhte Betriebssicherheit erreicht wird, indem betriebsbedingte Schäden im Bereich der Konusfläche und insbesondere der elastischen Ringdichtung vermieden werden.

Erfindungsgemäß wird dies durch die Merkmale des unabhängigen Anspruchs 1 erreicht. Vorteilhafte Ausgestaltungen der Erfindung sind in den abhängigen Ansprüchen 2 bis 14 und auch in der anschließenden Beschreibung enthalten. Zudem ist ein mit dem erfindungsgemäßen Ventilelement ausgestattetes Kupplungsteil Gegenstand des Anspruchs 15 und der davon abhängigen Ansprüche 16 und 17.

Demnach ist erfindungsgemäß vorgesehen, dass der Ventilkörper aus einem Kunststoff-Basisteil und einem die äußere Konusfläche und den Öffnungsansatz aufweisenden Vorderteil gebildet ist, wobei die elastische Ringdichtung zumindest mit dem Basisteil stoffschlüssig verbunden ist. In bevorzugter Ausgestaltung ist das Basisteil einstückig mit der Ringdichtung als Zweikomponenten-Formteil aus zwei verschiedenen Kunststoffen ausgebildet, wobei das Basisteil aus einer Hartkomponente, insbesondere einem faserverstärkten Polyamid, und die Ringdichtung aus einer Weichkomponente, insbesondere einem thermoplastischen Elastomer TPE, bestehen.

Durch die erfindungsgemäße Ausgestaltung kann der Ventilkörper auf sehr einfache und schnelle - und dadurch insgesamt sehr wirtschaftliche - Weise in nur einem Herstellungsvorgang spritzformtechnisch hergestellt werden, wobei vorteilhafterweise auch das Vorderteil mit ein- bzw. angeformt werden kann, indem es als vorgefertigtes Einzelteil mit in die Spritzform eingelegt und hinterspritzt wird. Dadurch ist das Vorderteil stoffschlüssig und insbesondere zusätzlich auch formschlüssig mit dem Basisteil verbunden, indem das Vorderteil während des Spritzformvorgangs unmittelbar mit dem Material des Basisteils spritzformtechnisch stoffschlüssig verbunden und dabei bevorzugt über geeignete Hinterschnitt-Konturen zusätzlich auch eine Formschlussverbindung hergestellt wird. Zusätzlich kann das Vorderteil auch mit dem angespritzten Material der Ringdichtung stoffschlüssig verbunden sein.

Das Vorderteil ist erfindungsgemäß dazu konzipiert, über die äußere Konusfläche die Anlagekraft in der Schließstellung im gehäuseseitigen Konus-Dichtsitz abzustützen. Da diese Anlagekraft im Falle eines hydraulischen Innendrucks sehr hoch sein kann, besteht das Vorderteil bevorzugt aus Metall, insbesondere aus einem legierten Stahl. Alternativ kann aber auch ein geeigneter, hochfester Kunststoff mit zu Stahl etwa gleichwertigen mechanischen Eigenschaften oder auch ein Keramik-Material verwendet werden.

Indem somit der Ventilkörper zumindest überwiegend aus Kunststoff besteht, wird auch das Gewicht des Ventilelementes vorteilhaft reduziert. Das Vorderteil kann als Vollkörper ausgebildet sein. Für eine weitere Gewichtreduzierung ist es aber vorteilhaft, das bevorzugt aus Stahl bestehende Vorderteil als kappenartigen Hohlkörper auszubilden, der das Basisteil auf der vorderen Stirnseite übergreift und innenseitig zumindest teilweise mit dem Material des Basisteils ausgefüllt ist.

Das Vorderteil ist im Anlagebereich der äußeren Konusfläche mit einer Quer- bzw. Längsschnittsgeometrie derart ausgebildet, dass es eine hinreichende mechanische Stabilität zur Abstützung gegen eine Schließkraft gewährleistet, die nach der Gleichung F = p· A (Kraft = Druck· beaufschlagte Fläche) aus einem hydraulischen Innendruck von bis zu mindestens 1600 bar resultiert. Damit ist das erfindungsgemäße Ventilelement bzw. ein mit diesem ausgerüstetes Steckkupplungsteil für einen Betriebsdruck von bis zu mindestens 400 bar bei vierfacher Sicherheit geeignet (4 · 400 bar = 1600 bar).

Der erfindungsgemäße Ventilkörper gewährleistet auch im Sinne der obigen Aufgabe eine hohe Betriebssicherheit im Dichtungsbereich. Indem die weichelastische Ringdichtung stoffschlüssig zumindest mit dem Basisteil verbunden ist, wird sie sicher gegen strömungsbedingte Schäden geschützt. Ein gänzliches "Auswaschen" ist praktisch ausgeschlossen.

Der erfindungsgemäße Ventilkörper ist sowohl für den Kupplungsstecker als auch für die Kupplungsmuffe einer Hochdruck-Steckkupplung geeignet, wobei es sich um Ausführungen mit einfachem Ventilhub beim Öffnen, aber auch um unter Druck kuppelbare Ausführungen, so genannte UDK-Kupplungen, mit doppeltem Ventilhub beispielsweise im Sinne der eingangs genannten Veröffentlichungen handeln kann.

Anhand der Zeichnungen und eines darin veranschaulichten, bevorzugten Ausführungsbeispiels soll die Erfindung im Folgenden genauer erläutert werden. Es zeigen:
- Fig. 1: eine mit erfindungsgemäßen Ventilelementen ausgestattete Hochdruckkupplung mit ihren zwei Steckkupplungsteilen jeweils im Halb-Axialschnitt in lagerichtiger Zuordnung zueinander vor dem Steckkuppeln bzw. nach dem Entkuppeln mit jeweils geschlossenen Ventilen,
- Fig. 2: eine gesonderte, im Maßstab gegenüber Fig. 1 vergrößerte Seitenansicht eines Ventilelementes in der erfindungsgemäßen Ausgestaltung,
- Fig. 3: einen Axialschnitt des Ventilelementes nach Fig. 2 und
- Fig. 4: eine verkleinerte Explosionsdarstellung zu der Seitenansicht in Fig. 2.

In den verschiedenen Figuren der Zeichnung sind gleiche Teile stets mit den gleichen Bezugszeichen versehen.

Zu der anschließenden Beschreibung wird ausdrücklich betont, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels sowie auch unabhängig von den Merkmalskombinationen und Rückbeziehungen der Ansprüche eine erfinderische Bedeutung haben.

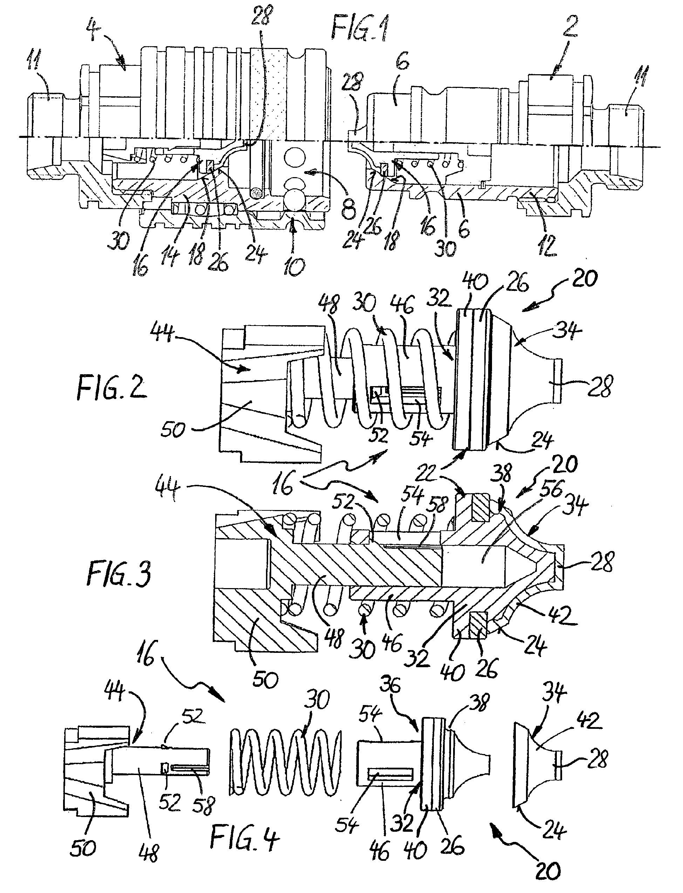

Zunächst ist in Fig. 1 allgemein eine Hochdruck-Steckkupplung veranschaulicht, die als Schnellkupplung ein schnelles Verbinden und Trennen von zwei Hydraulik-Druckleitungen ermöglicht und dazu aus zwei zusammensteckbaren Kupplungsteilen besteht, und zwar aus einem Kupplungsstecker 2 und einer Kupplungsmuffe 4. Der Kupplungsstecker 2 ist mit einem vorderen Steckerschaft 6 unter umfangsgemäßer Abdichtung in eine Aufnahmeöffnung 8 der Kupplungsmuffe 4 einsteckbar und über eine Verriegelungseinrichtung 10 in der eingesteckten Kupplungslage lösbar arretierbar. Die Verriegelungseinrichtung 10 kann - wie dargestellt - als übliche, hinlänglich bekannte Sperrkugelverriegelung ausgebildet sein. Die jeweils der vorderen Verbindungsseite, d. h. dem Steckerschaft 6 bzw. der Aufnahmeöffnung 8, axial gegenüberliegenden Seiten der Kupplungsteile 2, 4 weisen Anschlussabschnitte 11 für nicht dargestellte Hydraulik-Druckleitungen auf.

Jedes Kupplungsteil 2, 4 weist ein Kupplungsgehäuse 12, 14 auf, in dem ein Ventilelement 16 angeordnet ist, das mit einem inneren Konus-Dichtsitz 18 des Kupplungsgehäuses 12 bzw. 14 als Kegel-Sitzventil so zusammenwirkt, dass sich die Ventile beim Steckkupplungsvorgang der Kupplungsteile 2, 4 selbsttätig gegenseitig öffnen, und beim Trennen der Kupplung schließen die Ventile selbsttätig, um Leckagen zu vermeiden.

Wie sich nun besonders aus den Fig. 2 bis 4 ergibt, weist das für den Kupplungsstecker 2 und/oder die Kupplungsmuffe 4 vorgesehene bzw. geeignete Ventilelement 16 einen stößelartigen Ventilkörper 20 zur längsbeweglichen Anordnung in dem jeweiligen Kupplungsgehäuse 12 bzw. 14 auf. Der Ventilkörper 20 ist pilzartig mit einem Ventilkopf 22 ausgebildet, der einerseits als Dichtkegel zur dichtenden Anlage in dem gehäuseseitigen Konus-Dichtsitz 18 eine äußere Konusfläche 24 und eine elastische Ringdichtung 26 sowie andererseits auf seiner vorderen Stirnseite einen axial vorstehenden Öffnungsansatz 28 aufweist. Beim Kuppelvorgang kommen diese Öffnungsansätze 28 der beiden Ventilkörper 20 zur direkten stirnseitigen Anlage aneinander, so dass sich beim weitergehenden Zusammenstecken die Ventile selbsttätig gegenseitig öffnen, indem jeder Ventilkörper 20 axial gegen die Kraft einer Schließfeder 30 in das jeweilige Gehäuse 12, 14 hinein bewegt wird, wodurch sich die Ventilköpfe 22 mit der äußeren Konusfläche 24 und der elastischen Ringdichtung 26 vom jeweiligen Dichtsitz 18 abheben.

Wie sich nun weiter aus den Fig. 2 bis 4 ergibt, ist der Ventilkörper 20 nicht - wie bisher üblich - massiv aus Stahl mit separat montierter Ringdichtung ausgebildet, vielmehr ist erfindungsgemäß der Ventilkörper 20 aus einem Kunststoff-Basisteil 32 und einem die äußere Konusfläche 24 und den Öffnungsansatz 28 aufweisenden Vorderteil 34 gebildet, wobei die elastische Ringdichtung 26 zumindest mit dem Basisteil 32 stoffschlüssig verbunden ist. Dazu ist in bevorzugter Ausgestaltung das Basisteil 32 einstückig mit der Ringdichtung 26 als Zweikomponenten-Formteil 36, s. insbesondere Fig. 4, aus zwei verschiedenen Kunststoffen ausgebildet. Das Basisteil 32 besteht aus einer Hartkomponente, insbesondere einem faserverstärkten Polyamid, während die Ringdichtung 26 aus einer Weichkomponente besteht, insbesondere einem geeigneten thermoplastischen Elastomer TPE.

Als Material für die Hartkomponente des Basisteils 32 kann mit Vorteil ein normalviskoser, hitzestabilisierter PA66+PA6-Spritzgusstyp mit 30% Glasfasern verwendet werden. Ein solches Material ist beispielsweise unter der Bezeichnung GRILON TSG-30/4 W erhältlich, wobei "GRILON" eine eingetragene Marke ist. Die Produktbezeichnung nach ISO1874 ist: PA66+PA6, NHR, 14-100N, GF30. Ein für die Weichkomponente der Ringdichtung 26 geeignetes Material ist beispielsweise unter der Bezeichnung HX81MB von der Firma Kraiburg erhältlich.

Das Vorderteil 34 ist zweckmäßig stoffschlüssig und/oder formschlüssig mit dem Basisteil 32 bzw. mit dem Formteil 36 und bevorzugt auch stoffschlüssig mit der Ringdichtung 26 verbunden. Vorzugsweise wird das Vorderteil 34 während des Spritzformvorgangs unmittelbar mit dem Material des Basisteils 32 und gegebenenfalls auch der Ringdichtung 26 spritzformtechnisch verbunden, wobei über Hinterschnitt-Konturen 38, s. insbesondere Fig. 3, zusätzlich auch eine Formschlussverbindung hergestellt wird.

Gemäß Fig. 2 und 3 ist die Ringdichtung 26 mit einem bevorzugt rechteckigen Ringquerschnitt angrenzend an die äußere Konusfläche 24 axial zwischen dem Vorderteil 34 und einem umfangsgemäßen radialen Ringstegabschnitt 40 des Basisteils 32 angeordnet. Hierbei überragt die Ringdichtung 26 mit einem vorderen umfangsgemäßen Ringkantenbereich die angrenzende äußere Konusfläche 24 bereichsweise geringfügig radial nach außen. Dieser Überstand gewährleistet eine elastische Dichtungsverpressung in der Ventil-Schließstellung bei Anlage im Dichtsitz 18.

Das Vorderteil 34 besteht bevorzugt aus einem geeigneten legierten Stahl und ist weiter bevorzugt als kappenartiger Hohlkörper 42 ausgebildet, der innenseitig gemäß Fig. 3 zumindest teilweise mit dem Material des Basisteils 32 ausgefüllt ist. Hierbei ist der Hohlkörper 42 im Anlagebereich der äußeren Konusfläche 24 mit einer Querschnittsgeometrie derart ausgebildet, dass er eine hinreichende mechanische Stabilität zur Abstützung gegen eine Schließkraft gewährleistet, die aus einem hydraulischen Innendruck von bis zu mindestens 1600 bar resultiert. Damit ist das Ventilelement 16 bzw. ein mit diesem ausgerüstetes Steckkupplungsteil 2 oder 4 für einen Betriebsdruck von bis zu 400 bar bei vierfacher Sicherheit geeignet (4 · 400 bar = 1600 bar).

In weiterer vorteilhafter Ausgestaltung ist der Ventilkörper 20 längsbeweglich mit einem Lagerkörper 44 verbunden, wobei zwischen dem Ventilkörper 20 und dem Lagerkörper 44 die oben bereits erwähnte Schließfeder 30 angeordnet ist. Für diese Verbindung mit dem Lagerkörper 44 weist das Basisteil 32 des Ventilkörpers 20 im Anschluss an den Ventilkopf 22, d. h. an den Bereich des Ringstegabschnittes 40, einen axialen Führungsschaft 46 auf, der mit einem Lagerschaft 48 des Lagerkörpers 44 zur relativen Längsbewegung teleskopartig zusammengesteckt ist. Der Lagerkörper 44 weist einen mit dem Lagerschaft 48 verbundenen Stützabschnitt 50 mit einem bevorzugt sternartigen Querschnitt auf. Mit diesem Stützabschnitt 50 ist das ganze Ventilelement 16 innerhalb des jeweiligen Kupplungsgehäuses 12 bzw. 14 gehalten.

Der Stützabschnitt 50 kann - wie dargestellt - aus beispielsweise drei radialsymmetrisch angeordneten, radialen Stegen bestehen. Durch diesen bevorzugt sternartigen Querschnitt wird innerhalb des jeweiligen Kupplungsteils 2, 4 ein ausreichender Strömungsquerschnitt zur hydraulischen Durchströmung geschaffen.

In weiterer bevorzugter Ausgestaltung ist der Lagerkörper 44 als einstückiges Kunststoff-Formteil ausgebildet, insbesondere ebenfalls aus einem faserverstärkten Polyamid. Für den Lagerkörper 44 wird bevorzugt ein normalviskoser, hitzestabilisierter PA66+PA6-Spritzgusstyp mit 50 % Glasfasern verwendet. Es kann sich beispielsweise um ein Material handeln, welches unter der Bezeichnung GRILON TSG-50/4W erhältlich ist (GRILON eingetragene Marke). Die Produkt-Bezeichnung nach IS01874 ist: PA66+PA6, MHR, 14-160N, GF50.

Die Schließfeder 30 ist als Schrauben-Druckfeder aus einem üblichen Federstahl ausgebildet, und sie umschließt die zusammengesteckten Führungs- und Lagerschäfte 46, 48 koaxial. Hierbei sitzt die Schließfeder 30 unter Vorspannung zwischen dem Stützabschnitt 50 des Lagerkörpers 44 und dem Ventilkopf 22 des Ventilkörpers 20.

In dem dargestellten, bevorzugten Ausführungsbeispiel greift der Lagerschaft 48 des Lagerkörpers 44 in den hohlzylindrisch ausgebildeten Führungsschaft 46 des Ventilkörpers 20 ein, wobei der Lagerschaft 48 auf seinem Außenumfang mindestens einen radial vorstehenden Halteansatz 52 aufweist, der in einem Längsschlitz 54 des Führungsschaftes 46 geführt ist und die Verbindung in einer Endstellung formschlüssig gegen Lösen durch die Federkraft sichert. Vorzugsweise sind jeweils drei um 120° versetzte Halteansätze 52 und Längsschlitze 54 vorgesehen. Dabei sind die Halteansätze 52 derart als Rastnasen ausgebildet, dass sie beim Einstecken des Lagerschaftes 48 in den Führungsschaft 46 als formschlüssige Rastverbindungen wirken; sie sind unter elastischer Verformung insbesondere der Umfangswandung des Führungsschaftes 46 einführbar und greifen dann durch elastische Rückverformung in die Längsschlitze 54 ein. Durch einen Hinterschneidungswinkel ≥ 90° wird eine formschlüssige Verbindung gegen Lösen erreicht.

Es wird ausdrücklich bemerkt, dass die Steckverbindung zwischen dem Führungsschaft 46 und dem Lagerschaft 48 auch umgekehrt ausgebildet sein kann, d. h. der Führungsschaft 46 kann mit einer zylindrischen Ausgestaltung in den dann hohlzylindrisch ausgebildeten Lagerschaft 48 eingesteckt werden.

Die teleskopartig zusammengesteckten Führungs- und Lagerschäfte 46, 48 des Ventilkörpers 20 einerseits und des Lagerkörpers 44 andererseits schließen gemäß Fig. 3 - nach Art einer Zylinder-Kolben-Anordnung eines Teleskopzylinders - einen Hohlraum 56 ein. Um zu vermeiden, dass durch ein eingeschlossenes Luft- und/oder Hydraulikvolumen die Relativbewegungen behindert werden, ist der Hohlraum 56 zum Druckausgleich über einen nach außen führenden Kanal 58 mit der das Ventilelement 16 umschließenden Umgebung verbunden. Der Kanal 58 ist zweckmäßig durch mindestens eine Längsnut des Lagerschaftes 48 gebildet, die über einen der Längsschlitze 54 des Führungsschaftes 46 nach außen führt, s. auch Fig. 4.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben.

## Patentansprüche

1. Ventilelement (16) für ein Kupplungsteil (2/4) einer Hochdruckkupplung für hydraulische Druckmittel, mit einem Ventilkörper (20) zur längsbeweglichen Anordnung in einem Kupplungsgehäuse (12/14), wobei der Ventilkörper (20) einen Ventilkopf (22) aufweist, der einerseits zur dichtenden Anlage in einem gehäuseseitigen Konus-Dichtsitz (18) eine äußere Konusfläche (24) und eine elastische Ringdichtung (26) und andererseits auf seiner vorderen Stirnseite einen axial vorstehenden Öffnungsansatz (28) aufweist,
**dadurch gekennzeichnet, dass** der Ventilkörper (20) aus einem Kunststoff-Basisteil (32) und einem die äußere Konusfläche (24) und den Öffnungsansatz (28) aufweisenden Vorderteil (34) gebildet ist, wobei die elastische Ringdichtung (26) zumindest mit dem Basisteil (32) stoffschlüssig verbunden ist.

2. Ventilelement nach Anspruch 1,
**dadurch gekennzeichnet, dass** das Vorderteil (34) aus Metall, insbesondere einem legierten Stahl, oder einem anderen, bezüglich seiner mechanischen Eigenschaften gleichwertigen Material, wie einem hochfesten Kunststoff oder Keramik, besteht.

3. Ventilelement nach Anspruch 1 oder 2,
**dadurch gekennzeichnet, dass** das Basisteil (32) einstückig mit der Ringdichtung (26) als Zweikomponenten-Formteil (36) aus zwei verschiedenen Kunststoffen ausgebildet ist.

4. Ventilelement nach einem der Ansprüche 1 bis 3,
**dadurch gekennzeichnet, dass** das Basisteil (32) aus einer Hartkomponente, insbesondere einem faserverstärkten Polyamid, und die Ringdichtung (26) aus einer Weichkomponente, insbesondere einem thermoplastischen Elastomer, bestehen.

5. Ventilelement nach einem der Ansprüche 1 bis 4,
**dadurch gekennzeichnet, dass** das Vorderteil (34) stoffschlüssig und/oder formschlüssig mit dem Basisteil (32) und bevorzugt auch zumindest stoffschlüssig mit der Ringdichtung (26) verbunden ist.

6. Ventilelement nach einem der Ansprüche 1 bis 5,
**dadurch gekennzeichnet, dass** die Ringdichtung (26) mit einem bevorzugt rechteckigen Ringquerschnitt angrenzend an die äußere Konusfläche (24) axial zwischen dem Vorderteil (34) und einem umfangsgemäßen Ringstegabschnitt (40) des Basisteils (32) angeordnet ist, wobei die Ringdichtung (26) die angrenzende äußere Konusfläche (24) des Vorderteils (34) bereichsweise geringfügig radial nach außen überragt.

7. Ventilelement nach einem der Ansprüche 1 bis 6,
**dadurch gekennzeichnet, dass** das Vorderteil (34) als Vollkörper oder als kappenartiger Hohlkörper (42) ausgebildet ist, der innenseitig zumindest teilweise mit dem Material des Basisteils (32) ausgefüllt ist.

8. Ventilelement nach einem der Ansprüche 1 bis 7,
**dadurch gekennzeichnet, dass** der Ventilkörper (20) längsbeweglich mit einem Lagerkörper (44) verbunden ist, wobei zwischen dem Ventilkörper (20) und dem Lagerkörper (44) eine Schließfeder (30) angeordnet ist.

9. Ventilelement nach Anspruch 8,
**dadurch gekennzeichnet, dass** das Basisteil (32) des Ventilkörpers (20) im Anschluss an den Ventilkopf (22) einen axialen Führungsschaft (46) aufweist, der mit einem Lagerschaft (48) des Lagerkörpers (44) zur Längsverschiebung zusammengesteckt und bevorzugt unlösbar verbunden ist.

10. Ventilelement nach Anspruch 9,
**dadurch gekennzeichnet, dass** der Lagerkörper (44) einen mit dem Lagerschaft (48) verbundenen Stützabschnitt (50) mit einem vorzugsweise sternartigen Querschnitt aufweist.

11. Ventilelement nach einem der Ansprüche 8 bis 10,
**dadurch gekennzeichnet, dass** der Lagerkörper (44) als einstückiges Kunststoff-Formteil ausgebildet ist, insbesondere aus einem faserverstärkten Polyamid.

12. Ventilelement nach einem der Ansprüche 8 bis 11,
**dadurch gekennzeichnet, dass** die Schließfeder (30) als Druckfeder ausgebildet ist, die die zusammengesteckten Führungs- und Lagerschäfte (46, 48) koaxial umschließt und unter Vorspannung zwischen dem Stützabschnitt (50) des Lagerkörpers (44) und dem Ventilkopf (22) des Ventilkörpers (20) sitzt.

13. Ventilelement nach einem der Ansprüche 9 bis 12,
**dadurch gekennzeichnet, dass** der Lagerschaft (48) in den hohl ausgebildeten Führungsschaft (46) eingreift, wobei der Lagerschaft (48) auf seinem Außenumfang mindestens einen radial vorstehenden Halteansatz (52) aufweist, der in einem Längsschlitz (54) des Führungsschaftes (46) geführt ist und die Verbindung in einer Endstellung formschlüssig gegen Lösen sichert.

14. Ventilelement nach einem der Ansprüche 9 bis 13,
**dadurch gekennzeichnet, dass** die teleskopartig zusammengesteckten Führungs- und Lagerschäfte (46, 48) des Ventilkörpers (20) und des Lagerkörpers (44) einen Hohlraum (56) einschließen, der zum Druckausgleich über einen nach außen führenden Kanal (58) offen ist.

15. Kupplungsteil (2/4) für eine Hochdruckkupplung für hydraulische Druckmittel, bestehend aus einem Kupplungsgehäuse (12/14) mit einem inneren Konus-Dichtsitz (18) und aus einem in dem Kupplungsgehäuse (12/14) angeordneten Ventilelement (16) nach einem der vorhergehenden Ansprüche.

16. Kupplungsteil nach Anspruch 15,
**gekennzeichnet durch** eine Ausbildung als Kupplungsstecker (2) zum Einstecken in eine Kupplungsmuffe (4).

17. Kupplungsteil nach Anspruch 15,
**gekennzeichnet durch** eine Ausbildung als Kupplungsmuffe (4) zur Aufnahme eines einzusteckenden Kupplungssteckers (2).

## Claims

1. Valve element (16) for a coupling part (2/4) of a high-pressure coupling for hydraulic pressure media, with a valve body (20) for longitudinally movable arrangement in a coupling housing (12/14), the valve body (20) having a valve head (22) which, on the one hand, for sealing contact in a housing-side conical sealing seat (18), has an outer conical surface (24) and an elastic ring seal (26) and, on the other hand, on its front end, has an axially projecting opening nose (28),
**characterized in that** the valve body (20) is formed from a plastic base part (32) and a front part (34) having the outer conical surface (24) and the opening nose (28), the elastic ring seal (26) being connected in a material-locked manner at least to the base part (32).

2. Valve element according to claim 1,
**characterized in that** the front part (34) is composed of metal, in particular an alloyed steel, or any other equivalent material with respect to its mechanical properties, such as a high-strength plastic or ceramic.

3. Valve element according to claim 1 or 2,
**characterized in that** the base part (32) is formed integrally with the ring seal (26) as a two-component moulded part (36) from two different plastics.

4. Valve element according to one of claims 1 to 3,
**characterized in that** the base part (32) is composed of a hard component, in particular a fibre-reinforced polyamide, and the ring seal (26) is composed of a soft component, in particular a thermoplastic elastomer.

5. Valve element according to one of claims 1 to 4,
**characterized in that** the front part (34) is connected in a material-locked and/or form-locked manner to the base part (32) and preferably also connected at least in a material-locked manner to the ring seal (26).

6. Valve element according to one of claims 1 to 5,
**characterized in that** the ring seal (26) is arranged, with a preferably rectangular ring cross-section, adjacently to the outer conical surface (24) axially between the front part (34) and a circumferential ring web portion (40) of the base part (32), the ring seal (26) projecting in some regions slightly radially outwardly beyond the adjacent outer conical surface (24) of the front part (34).

7. Valve element according to one of claims 1 to 6,
**characterized in that** the front part (34) is formed as a solid body or as a cap-like hollow body (42) which on the inside is at least partially filled with the material of the base part (32).

8. Valve element according to one of claims 1 to 7,
**characterized in that** the valve body (20) is longitudinally movably connected to a bearing body (44), a closing spring (30) being arranged between the valve body (20) and the bearing body (44).

9. Valve element according to claim 8,
**characterized in that** the base part (32) of the valve body (20) has, adjoining the valve head (22), an axial guide stem (46) which is fitted together with and preferably non-detachably connected to a bearing stem (48) of the bearing body (44) for longitudinal displacement.

10. Valve element according to claim 9,
**characterized in that** the bearing body (44) has a supporting portion (50) which is connected to the bearing stem (48) and preferably has a star-like cross section.

11. Valve element according to one of claims 8 to 10,
**characterized in that** the bearing body (44) is formed as a one-piece plastic moulded part, in particular composed of a fibre-reinforced polyamide.

12. Valve element according to one of claims 8 to 11,
**characterized in that** the closing spring is formed (30) as a compression spring which coaxially surrounds the fitted-together guide and bearing stems (46, 48) and is seated under pretension between the supporting portion (50) of the bearing body (44) and the valve head (22) of the valve body (20).

13. Valve element according to one of claims 9 to 12,
**characterized in that** the bearing stem (48) engages in the hollow guide stem (46), the bearing stem (48) having on its outer periphery at least one radially projecting retaining lug (52) which is guided in a longitudinal slot (54) of the guide stem (46) and secures the connection in an end position in a form-locked manner against detachment.

14. Valve element according to one of claims 9 to 13,
**characterized in that** the telescopically fitted-together guide and bearing stems (46, 48) of the valve body (20) and of the bearing body (44) include a cavity (56) which is open for pressure compensation via a passage (58) leading outwards.

15. Coupling part (2/4) for a high-pressure coupling for hydraulic pressure media, consisting of a coupling housing (12/14) with an inner conical sealing seat (18) and of a valve element (16) according to one of the preceding claims arranged in the coupling housing (12/14).

16. Coupling part according to claim 15,
**characterized by** a construction as a coupling plug (2) for plugging into a coupling sleeve (4).

17. Coupling part according to claim 15,
**characterized by** a construction as a coupling sleeve (4) for receiving a coupling plug (2) to be plugged in.

## Revendications

1. Elément de soupape (16) pour une partie de raccord (2/4) d'un raccord haute pression pour des milieux sous pression hydrauliques, comprenant un corps de soupape (20) destiné à être disposé de manière mobile longitudinalement dans un carter de raccord (12/14), dans lequel le corps de soupape (20) présente une tête de soupape (22), qui présente d'une part, une surface conique extérieure (24) et un joint d'étanchéité annulaire (26) élastique afin de venir en appui de manière étanche dans un siège d'étanchéité conique (18) côté carter, et d'autre part, sur son côté frontal avant, un épaulement d'ouverture (28) faisant saillie axialement,
**caractérisé en ce que** le corps de soupape (20) est formé à partir d'une partie de base en matière plastique (32) et d'une partie avant (34) présentant la surface conique extérieure (24) et l'épaulement d'ouverture (28), dans lequel le joint d'étanchéité annulaire (26) élastique est relié par liaison de matière au moins à la partie de base (32).

2. Elément de soupape selon la revendication 1,
**caractérisé en ce que** la partie avant (34) est constituée de métal, en particulier d'un acier allié ou d'un autre matériau de même valeur en ce qui concerne ses propriétés mécaniques, tel qu'une matière plastique très résistante ou une céramique.

3. Elément de soupape selon la revendication 1 ou 2,
**caractérisé en ce que** la partie de base (32) est réalisée d'un seul tenant avec le joint d'étanchéité annulaire (26) sous la forme d'une partie moulée à deux composants (36) constituée de deux matières plastiques différentes.

4. Elément de soupape selon l'une quelconque des revendications 1 à 3,
**caractérisé en ce que** la partie de base (32) est constituée d'un composant dur, en particulier d'un polyamide renforcé par des fibres, et **en ce que** le joint d'étanchéité annulaire (26) est constitué d'un composant mou, en particulier d'un élastomère thermoplastique.

5. Elément de soupape selon l'une quelconque des revendications 1 à 4,
**caractérisé en ce que** la partie avant (34) est reliée par liaison de matière et/ou par complémentarité de forme à la partie de base (32) et de préférence également au moins par liaison de matière au joint d'étanchéité annulaire (26).

6. Elément de soupape selon l'une quelconque des revendications 1 à 5,
**caractérisé en ce que** le joint d'étanchéité annulaire (26) est disposé par une section transversale annulaire de préférence rectangulaire, de manière à être contigu à la surface conique extérieure (24), de manière axiale entre la partie avant (34) et une section périphérique de nervure annulaire (40) de la partie de base (32), dans lequel le joint d'étanchéité annulaire (26) dépasse par endroits légèrement radialement vers l'extérieur la surface conique extérieure (24) contiguë de la partie avant (34).

7. Elément de soupape selon l'une quelconque des revendications 1 à 6,
**caractérisé en ce que** la partie avant (34) est réalisée sous la forme d'un corps plein ou sous la forme d'un corps creux (42) à la manière d'un capuchon, lequel corps creux est rempli côté intérieur au moins en partie du matériau de la partie de base (32).

8. Elément de soupape selon l'une quelconque des revendications 1 à 7,
**caractérisé en ce que** le corps de soupape (20) est relié de manière mobile longitudinalement à un corps de palier (44), sachant qu'un ressort de fermeture (30) est disposé entre le corps de soupape (20) et le corps de palier (44).

9. Elément de soupape selon la revendication 8,
**caractérisé en ce que** la partie de base (32) du corps de soupape (20) présente dans le prolongement de la tête de soupape (22) une tige de guidage (46) axiale, qui est reliée par emboîtement et de préférence sans qu'elle puisse être retirée à une tige de palier (48) du corps de palier (44) aux fins du déplacement longitudinal par coulissement.

10. Elément de soupape selon la revendication 9,
**caractérisé en ce que** le corps de palier (44) présente une section de support (50) reliée à la tige de palier (48) et dotée d'une section transversale de préférence à la manière d'une étoile.

11. Elément de soupape selon l'une quelconque des revendications 8 à 10,
**caractérisé en ce que** le corps de palier (44) est réalisé sous la forme d'une partie moulée à base de matière plastique d'un seul tenant, en particulier à partir d'un polyamide renforcé par des fibres.

12. Elément de soupape selon l'une quelconque des revendications 8 à 11,
**caractérisé en ce que** le ressort de fermeture (30) est réalisé sous la forme d'un ressort de pression, qui entoure de manière coaxiale les tiges de guidage et de palier (46, 48) emboîtées et qui repose sous l'action d'une précontrainte entre la section de support (50) du corps de palier (44) et la tête de soupape (22) du corps de soupape (20).

13. Elément de soupape selon l'une quelconque des revendications 9 à 12,
**caractérisé en ce que** la tige de palier (48) vient en prise avec la tige de guidage (46) réalisée de manière creuse, dans lequel la tige de palier (48) présente, sur sa périphérie extérieure, au moins un épaulement de maintien (52) faisant saillie radialement, qui est guidé dans une entaille longitudinale (54) de la tige de guidage (46) et qui assure l'assemblage dans une position finale par complémentarité de forme de manière à éviter tout détachement.

14. Elément de soupape selon l'une quelconque des revendications 9 à 13,
**caractérisé en ce que** les tiges de guidage et de palier (46, 48) emboîtées de manière télescopique du corps de soupape (20) et du corps de palier (44) forment un espace creux (56), qui est ouvert aux de la compensation de la pression au-dessus d'un canal (58) menant vers l'extérieur.

15. Partie de raccord (2/4) pour un raccord haute pression pour des milieux sous pression hydrauliques, constituée d'un carter de raccord (12/14) doté d'un siège d'étanchéité conique (18) intérieur et d'un élément de soupape (16), disposé dans le carter de raccord (12/14), selon l'une quelconque des revendications précédentes.

16. Partie de raccord selon la revendication 15,
**caractérisée par** une réalisation sous la forme d'un connecteur de raccord (2) destiné à être enfiché dans un manchon de raccord (4).

17. Partie de raccord selon la revendication 15,
**caractérisée par** une réalisation sous la forme d'un manchon de raccord (4) servant à loger un connecteur de raccord (2) devant être enfiché.
